# DEMANDE DE BREVET EUROPEEN

(11) **EP 4 397 628 A1**
(43) Date de publication de la demande: **10.07.2024**
(21) Numéro de dépôt: 24150102.2
(22) Date de dépôt: 02.01.2024
(51) Int. Cl.: C02F 1/00, C02F 1/28, C02F 3/04, C02F 3/06, C02F 3/32, F04F 10/00, C02F 103/00

(54) **DISPOSITIF POUR LA COLLECTE, LE TRAITEMENT, LE STOCKAGE ET LA RÉUTILISATION DES EAUX MÉNAGÈRES**

(30) Priorité: 04.01.2023 FR 2300055
(71) Demandeur: Aquatiris, 67300 Schiltigheim (FR)
(72) Inventeur: WERCKMANN, Martin, 67200 STRASBOURG (FR); BERRY, William, 67000 STRASBOURG (FR); MAILLARD, Elodie, 67300 SCHILTIGHEIM (FR); DELALANDE, François, 67200 STRASBOURG (FR)
(74) Mandataire: Cabinet Nuss

(57) **Abrégé**

L'invention a pour objet un dispositif pour la collecte, le traitement assainissant, le stockage temporaire et la réutilisation aux fins d'arrosage et d'irrigation des eaux ménagères (EM), comprenant un contenant (2) étanche ouvert sur le dessus, un massif de matériaux filtrants (3) planté de macrophytes (6) en surface et au moins un moyen (4, 4') d'évacuation de l'eau traitée (ET) pour son écoulement vers l'extérieur, le massif de matériaux filtrants (3) comportant au moins deux couches de médias filtrants différents superposés(5, 5', 5") et incorporent au moins une couche supérieure (5) plantée, les eaux ménagères (EM) étant déversées sur la surface et l'eau traitée (ET) étant extraite depuis une région de fond (2') du contenant.

Ce dispositif est caractérisé en ce que le ou l'un des moyen(s) (4, 4') d'évacuation de l'eau traitée (ET) constitue un dispositif de trop-plein et est configuré pour réaliser automatiquement et passivement l'évacuation d'une quantité contrôlée d'eau traitée (ET) lorsque le niveau de liquide présent dans le contenant (2) dépasse une cote maximale (CMax) préréglée, de manière à ramener ce niveau à une cote minimale (Cmin) déterminant le volume de liquide présent couramment dans le contenant (2).

## Description

La présente invention concerne le domaine de la gestion des ressources en eaux, en particulier au niveau des maisons individuelles, et notamment par la valorisation des eaux usées, du type eaux ménagères ou eaux grises à des fins d'irrigation et d'arrosage. Les eaux usées concernées sont typiquement celles provenant notamment de la cuisine (évier, bac de lavage, lave vaisselles, ...) et de la salle de bain (douche, baignoire, éviers, bidet, ...), à l'exclusion de celles provenant des toilettes.

Elle concerne plus particulièrement un dispositif ou un module à usage domestique pour la collecte, le traitement assainissant, le stockage temporaire et la réutilisation aux fins d'arrosage et/ou d'irrigation des eaux ménagères ou grises provenant d'une habitation.

Plusieurs dispositifs de traitement des eaux usées provenant d'habitations sont déjà connus.

La plupart des solutions existantes sont de construction complexe et sophistiquée et mettent en oeuvre des moyens de gestion électroniques et consomment continuellement ou au moins par intermittence de l'énergie, par exemple pour des actionnements mécaniques ou une circulation active des liquides, comme dans les stations d'épuration.

Il existe également des solutions passives qui nécessitent, pour présenter des performances satisfaisantes en termes de volume traité et au moins minimales en termes de qualité de traitement, soit des ouvrages de dimensions importantes, du type ouvrages de génie civil (voir par exemple CN 110171917), qui sont incompatibles avec un habitat urbain, soit la mise en oeuvre de plusieurs modules de traitement spécifiques en série (voir par exemple CN 114873731). En outre, la qualité du traitement réalisé est souvent difficilement contrôlable et ne peut être garantie.

Ainsi, dans les systèmes à rétention, une absence d'évacuation régulière des eaux traitées peut entraîner un abaissement notable de la qualité sanitaire et une prolifération de microorganismes nuisibles.

Dans les systèmes à écoulement permanent par gravité, l'absence totale de régulation rend la qualité de traitement variable en fonction de la quantité d'eaux à traiter.

La demanderesse commercialise déjà un produit dénommé « Phytotiny » destiné à l'assainissement des eaux usées ménagères des habitats non permanents, tels que les cabanes, les roulottes, les petites maisons ou analogues.

Ce dernier dispositif comprend un contenant étanche ouvert sur le dessus, un massif de matériaux filtrants planté en surface et au moins un moyen de retrait et/ou d'évacuation des eaux traitées pour leur écoulement vers l'extérieur, le massif de matériaux filtrants comportant deux couches de médias filtrants différents (une couche supérieure de sable et une couche inférieure de plaquettes de bois) qui sont arrangées de manière superposée verticalement dans le contenant. La couche supérieure est plantée et les eaux ménagères sont déversées sur la surface de la couche supérieure et les eaux traitées sont extraites, après percolation à travers le massif de matériaux filtrants, au niveau d'une région de fond du contenant.

Ce dispositif à écoulement permanent fait naturellement état de propriétés de traitement limitées (temps de séjour court, correspondant au temps de parcours traversant), et ne permet pas de contrôler positivement l'écoulement, ni de constituer une réserve d'eau pour les périodes sans production d'eaux usées ménagères.

La présente invention a pour but de pallier au moins les principaux inconvénients précités et de surmonter au moins les principales limitations mentionnées.

A cet effet, elle a pour objet un dispositif du type tel qu'évoqué dans le préambule de la revendication 1 et présentant en combinaison les caractéristiques de la partie caractérisante de cette revendication.

L'invention sera mieux comprise, grâce à la description ci-après, qui se rapporte à un mode de réalisation préféré, donné à titre d'exemple non limitatif, et expliqué avec référence au dessin schématique annexé, dont la figure unique :

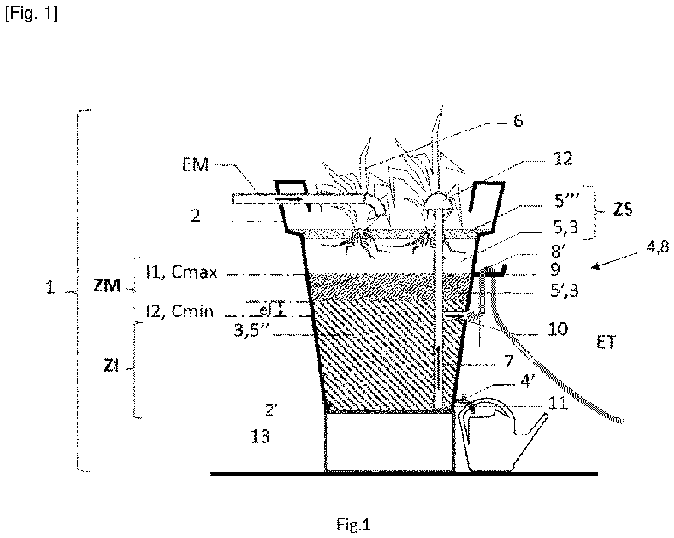

[Fig. 1] correspond à une vue en coupe d'un dispositif en accord avec un mode de réalisation avantageux de l'invention, selon un plan comprenant l'axe de symétrie vertical du contenant faisant partie du dispositif.

La figure annexée illustre un dispositif (1) pour la collecte, le traitement assainissant, le stockage temporaire et la réutilisation aux fins d'arrosage et d'irrigation des eaux ménagères ou grises (EM), le cas échéant brutes.

Ce dispositif (1) comprend un contenant (2) étanche ouvert sur le dessus, un massif de matériaux filtrants (3) planté de macrophytes (6) en surface et au moins un moyen (4, 4') d'extraction et/ou d'évacuation de l'eau traitée (ET) pour son écoulement vers l'extérieur. Le massif de matériaux filtrants (3) comporte au moins deux couches de médias filtrants différents (5, 5', 5") qui sont arrangées de manière superposée verticalement dans le contenant (2) et incorporent au moins une couche supérieure (5) plantée, les eaux ménagères (EM) étant déversées sur la surface de la couche supérieure (5) et l'eau traitée (ET) étant extraite, après percolation des liquides à travers le massif de matériaux filtrants (3), depuis une région de fond (2') du contenant (2).

Le ou l'un des moyen(s) (4, 4') d'évacuation et/ou de retrait de l'eau traitée (ET) constitue un dispositif de trop-plein et est configuré pour réaliser automatiquement et passivement, en fonctionnement courant dudit dispositif (1), l'évacuation d'une quantité contrôlée d'eau traitée (ET) lorsque le niveau de liquide présent dans le contenant (2) dépasse une cote maximale (CMax) préréglée, de manière à ramener ce niveau à une cote minimale (Cmin) déterminant le volume (normalement minimal) de liquide présent couramment dans le contenant (2). Ce moyen (4) d'évacuation de l'eau traitée (ET) constituant trop-plein comprend un conduit de drainage (7) qui est raccordé à un arrangement (8) de conduit d'évacuation extérieure, lequel comprend un siphon (8') fixant la cote maximale (CMax) et configuré pour réaliser, par auto-amorçage, une évacuation de l'eau traitée (ET) lorsque le niveau de liquide dans le contenant (2) atteint cette cote maximale (Cmax). La cote (Cmin) est située à distance du fond du contenant (2), cette distance déterminant le volume de liquide minimal ne pouvant être extrait par l'arrangement d'évacuation (8) et normalement toujours présent dans le contenant (2), sauf vidange ou soutirage par un éventuel second moyen d'évacuation (4') logé dans le fond, comme expliqué ci-après.

En accord avec l'invention, le massif de matériaux filtrants (3) comprend, en fonctionnement courant, trois zones fonctionnelles superposées pour les liquides présents dans le contenant (2), à savoir : i) une zone inférieure (ZI) de stockage permanent, continuellement saturée en eau traitée (ET) et soumise à des extractions par bâchées, ii) une zone médiane (ZM) de stockage dynamique, saturée de manière variable en liquides et soumise à des vidanges séquentielles vers la zone inférieure (ZI), et iii) une zone supérieure (ZS) dédiée au développement racinaire des plantes (6) présentes en surface, non-saturée et autorisant le passage vertical des liquides contenus dans les eaux ménagères (EM) déversées vers la zone médiane (ZM), suite à un premier traitement.

Également en accord avec l'invention, il est prévu en outre :
- que le conduit de drainage (7) est ouvert au niveau de la région de fond (2') du contenant (2) et s'étend dans le massif de matériaux filtrants (3) depuis cette région de fond (2') au moins jusqu'au niveau d'une cote minimale ou inférieure (Cmin),
- que l'ensemble [conduit de drainage (7) + arrangement de conduit (8)] présente un piquage latéral (10) au niveau de ladite cote inférieure (Cmin), et
- que la zone de stockage permanent (ZI) située au fond du contenant (2) est conçue pour garder un volume constant et toujours disponible d'eau traitée (ET), ce volume constant étant réglé par le niveau ou la cote (Cmin) dudit piquage (10) de la sortie haute et l'évacuation contrôlée et automatique d'eau traitée (ET) s'effectuant par bâchées dont le volume est réglé par combinaison de la cote minimale (Cmin) et de la cote maximale (Cmax).

Grâce à ces dispositions, l'invention permet de commander positivement la circulation des liquides dans le massif filtrant en association avec la seule gravitation, par un phénomène de transition forcée des liquides à travers le massif filtrant, induit par une extraction contrôlée en partie basse du contenant. Et, elle fournit un dispositif (1) totalement passif, autorégulant, garantissant un temps de séjour suffisant pour un traitement de qualité minimale (pour l'utilisation envisagée), délivrant automatiquement des bâchées d'eau traitée ayant percolé à travers tout le massif filtrant et permettant aussi de disposer en permanence d'une réserve d'eau traitée (éventuellement extractible par un second moyen en partie basse du contenant).

Plus précisément, l'invention permet de mettre à disposition un dispositif d'équipement domestique fournissant non seulement un traitement efficace et fiable des eaux ménagères, en mettant à profit des conditions de traitement à la fois aérobie et anaérobie, mais également un arrosage autonome et sans besoin d'électricité par effet bâché.

En effet, la zone médiane de stockage dynamique (ZM) ou zone de battement prévue par l'invention, est conçue pour permettre un arrosage passif contrôlé, c'est-à-dire fonctionnant de manière autonome et autoamorcée. Ainsi, au cours de la journée par exemple, cette zone médiane (ZM) peut en alternance se remplir par déversement d'eaux ménagères et se vider sous l'effet de l'aspiration vers le bas générée par l'évacuation par bâchées à travers la sortie haute constituée par l'arrangement d'évacuation (8). La quantité d'eau disponible dans cette zone médiane (ZM) et évacuée à chaque bâchée est définie par les deux cotes (Cmax et Cmin,) alors que la zone de stockage inférieure (ZI) conserve en permanence un volume d'eau donnée, fixée par la cote (Cmin).

Comme le montre la figure 1, et en accord avec une disposition constructive de l'invention, il peut être avantageusement prévu que dans le contenant (2), le plan horizontal associé à la cote maximale (CMax) corresponde sensiblement à une interface (11) entre la zone médiane (ZM) et la zone supérieure (ZS) et que le plan horizontal associé à la cote (Cmin) corresponde sensiblement à une interface (12) entre la zone médiane (ZM) et la zone inférieure (ZI).

Selon une variante de réalisation préférée, permettant d'avoir un traitement des eaux de qualité suffisante pour les utilisations envisagées et simultanément avoir un dispositif avec un encombrement limité, le massif de matériaux filtrants (3) est composé structurellement d'au moins trois couches filtrantes granulaires (5, 5', 5") différentes superposées verticalement, à savoir, du haut vers le bas, d'une première couche filtrante (5) formée de sable et recevant les systèmes racinaires de plantes (6), avantageusement des macrophytes, d'une deuxième couche filtrante (5') formée d'un mélange de matériaux naturels et d'une troisième couche (5") formée de charbon de bois, la première couche filtrante (5) étant, préférentiellement, recouverte d'une couche superficielle de paillage (5‴) apte à réaliser une filtration mécanique des eaux ménagères ou grises (EM) directement déversées sur elle.

En relation avec une possible exploitation optimisée de la variante constructive précitée, en termes notamment d'efficacité et de qualité de traitement, il peut être avantageusement prévu que la zone inférieure (ZI) de stockage permanent corresponde à la majeure partie de la troisième couche filtrante (5"), que la zone médiane (ZM) de stockage dynamique comprenne la deuxième couche filtrante (5') et une tranche supérieure d'épaisseur limitée (el) de la troisième couche filtrante (5"), attenante à la deuxième couche filtrante (5'), et que la zone supérieure (ZS) non-saturée corresponde à la première couche filtrante (5) additionnée de la couche de paillage (5‴).

Conformément à un mode de réalisation simple et efficace du moyen (4) d'évacuation de l'eau traitée (ET) constituant un trop-plein ou une sortie haute, et comme le montre la figure annexée, ce moyen (4) comprend un conduit de drainage (7) qui est ouvert au niveau de la région de fond (2') du contenant (2) (où se situe donc son entrée d'aspiration), qui s'étend dans le massif de matériaux filtrants (3) depuis cette région de fond (2') au moins jusqu'au niveau de la cote minimale (Cmin) et qui est raccordé (par un piquage 10 latéral) à un arrangement (8) de conduit d'évacuation extérieure, comprenant un siphon (8') fixant la cote maximale (CMax) et configuré pour réaliser avec auto-amorçage une évacuation d'une quantité contrôlée d'eau traitée (ET) lorsque le niveau de liquide dans le contenant (2) atteint cette cote maximale (Cmax).

Ce siphon (8') installé à une certaine hauteur par rapport au fond du contenant (2) fixe le volume d'eau maximum stocké en fonctionnement courant dans ce dernier et aspire par un effet de siphonage exclusivement de l'eau traitée (ET) résident au fond du contenant (2), c'est-à-dire un liquide ayant percolé à travers toutes les couches filtrantes du massif.

Dans une variante constructive économique et pratique à mettre en oeuvre par un particulier, le siphon (8') est constitué par une portion de tuyau flexible, par exemple une portion de tuyau d'arrosage de faible diamètre, formant un U inversé, ce siphon (8') étant attaché au contenant (2), par exemple par l'intermédiaire d'un site de fixation (9) du type crochet, éventuellement réglable en hauteur. Ledit siphon peut être constitué par une portion de conduit particulière prolongeant le piquage (1) (et à laquelle est raccordé le tuyau d'arrosage) ou directement par une portion d'un tuyau d'arrosage raccordé sur la sortie du piquage (10), comme illustré sur la figure 1. La position du coude du siphon (8) est préférentiellement telle qu'il est sensiblement de niveau avec la zone d'interface entre les première et deuxième couches filtrantes (5 et 5'). L'ensemble de moyens formant la sortie haute comprend ainsi le conduit de drainage (7) vertical, avec son entrée inférieure située près du fond du contenant (2) et son piquage latéral (10) à la cote (Cmin), l'arrangement de conduit (8) avec son siphon (8') prolongé par un tuyau (figure 1).

En combinaison avec la cote minimale (Cmin), on peut ainsi également régler et fixer le volume des bâchées évacuées automatiquement à chaque fois que le niveau des liquides dans le contenant (2) dépasse la cote maximale (CMax), ce qui provoque un amorçage de l'écoulement.

Le siphon (8') pourra correspondre à l'extrémité de raccordement (par clippage ou vissage étanche) de différents types de moyens d'arrosage et d'irrigation, et alimenter par exemple soit un tuyau d'arrosage manipulé par un utilisateur (le contenant 2 est alors avantageusement disposé à une certaine hauteur du sol), soit un tuyau d'arrosage par goutte à goutte posée au sol ou encore un tuyau alimentant un système d'arrosage automatique.

De manière avantageuse, il peut être prévu que le conduit de drainage (7) se prolonge vers le haut au-delà du niveau de la cote minimale (Cmin), jusqu'au-dessus de la surface de la couche supérieure (5), et le cas échéant au-dessus d'une éventuelle couche de paillage (5‴), pour former une cheminée d'aération (7'), le raccordement entre le conduit de drainage (7) et l'arrangement (8) de conduit d'évacuation extérieure se présentant sous la forme d'un piquage (10) latéral dans ledit conduit de drainage (7) à hauteur de la cote minimale (Cmin).

Au niveau de son ouverture inférieure, ce conduit de drainage (7) peut être avantageusement pourvu d'une grille protectrice (11) évitant une obstruction par les morceaux de charbon. Au niveau de son ouverture supérieure, ce même conduit peut être muni d'un chapeau d'aération (12) avec une moustiquaire.

Afin de pouvoir par exemple remplir un arrosoir (14) (voir figure) ou de pouvoir vider totalement le contenant (2) de tout liquide (période de non-utilisation ou vidange hivernale), le dispositif (1) peut comprendre un second moyen (4') d'évacuation de l'eau traitée (ET) depuis la région de fond (2') du contenant (2) et permettant un soutirage contrôlé de l'eau traitée (ET), jusqu'à une possible vidange complète des liquides du contenant (2), par exemple sous la forme d'un embout de soutirage à robinet. Avantageusement, le contenant (2) est installé à une certaine hauteur du sol (pour par exemple pouvoir disposer un arrosoir sous la sortie du second moyen d'évacuation ou piquage inférieur 4'), ou éventuellement posé au sol, et se présente avantageusement sous la forme d'un pot (par exemple du type pot de fleur géant), cylindrique ou tronconique en direction du fond.

L'homme du métier comprend que le dispositif (1) est à dimensionner aux besoins de chaque application. Il est bien entendu également possible de produire un module de dimensions standards et d'en associer plusieurs en parallèle pour augmenter la capacité de traitement.

En amont du dispositif (1), les eaux usées ménagères peuvent avoir subi éventuellement un prétraitement (filtrage mécanique, décantation, ...) et leur déversement, préférentiellement avec une répartition sensiblement homogène en surface (par le biais d'une pluralité de sorties réparties surfaciquement), peut s'effectuer avantageusement par simple gravité, mais également si nécessaire par pompage (pompe de relevage), ce en fonction de son installation (éventuellement à une certaine hauteur comme indiqué sur la figure, enterré ou posé au sol) et de l'arrangement des conduits d'évacuation des eaux usées de l'habitation concernée.

En aval du dispositif (1), l'eau traitée par ce dernier peut, en variante à une utilisation directe, aussi alimenter un moyen de filtration ou de traitement additionnel pour améliorer davantage encore sa qualité sanitaire et diversifier ses utilisations possibles.

A titre d'exemple non limitatif de dimensionnement d'un dispositif selon l'invention, il peut être prévu que, pour le traitement des eaux ménagères (EM) d'une maison individuelle, le massif de matériaux filtrants (3) à structure stratifiée est constitué d'un volume sensiblement cylindrique, éventuellement légèrement effilé tronconiquement vers le bas, d'un diamètre d'environ 1 m et d'une hauteur comprise entre environ 70 cm et 120 cm, préférentiellement de l'ordre d'environ 80 cm. Ce massif (3) comprend préférentiellement les couches filtrantes suivantes, superposées du haut vers le bas : i) une couche superficielle de paillage (5‴) d'épaisseur comprise entre environ 5 cm et 15 cm, par exemple formée de plaquettes, de sciure et/ou d'écorces de bois, ii) une première couche filtrante granulaire (5) formée de sable et d'épaisseur comprise entre environ 10 cm et 40 cm, iii) une deuxième couche filtrante granulaire (5') formée d'un mélange de coquilles d'huitres, de charbon et de terre cuite ou d'argile expansée, et d'épaisseur comprise entre environ 5 cm et 15 cm, et iiii) une troisième couche (5") formée de charbon de bois, de type charbon actif ou biochar, et d'épaisseur comprise entre environ 30 cm et 60 cm.

Les macrophytes (6) plantés en surface peuvent par exemple être des types : iris des marais, salicaires ou encore carex.

La deuxième couche filtrante granulaire (5') formée d'un mélange de matériaux naturels est par exemple composée, en pourcentages volumiques, de 20% à 40% des trois matériaux suivants : 1) fragments de coquilles d'huitres, 2) biochar ou charbon actif et 3) brique concassée ou argile expansée. Préférentiellement, les trois composants sont présents chacun à hauteur d'environ 33%.

On peut noter que la forme du contenant (2) peut avantageusement ressembler à celle d'un pot de fleur géant, mais d'autres formes par exemple parallélépipédiques, sphériques ou ovoïdes sont possibles. Il est avantageusement réalisé en un matériau étanche, résistant mécaniquement et sensiblement imputrescible, par exemple un matériau plastique dur du type polyéthylène ou polypropylène.

Le fonctionnement du dispositif (1) en relation avec le mode de réalisation illustré et le parcours des liquides en son sein peut se résumer comme décrit ci-après. Les eaux usées ménagères (EM) sont alimentées en partie haute sur le massif filtrant (3) présent dans le contenant (2), sont filtrées mécaniquement par la couche de paillage superficielle (5‴), percolent verticalement par gravité au travers des différentes couches superposées (5, 5', 5") de médias filtrants différents, où elles sont débarrassées d'une grande partie de la pollution solide et dissoute. L'écoulement des eaux est insaturé en partie haute du contenant (2), dans la zone fonctionnelle supérieure (ZS). Le traitement biologique des eaux par le biais des microorganismes se développant dans le media filtrant (sable) de cette zone (ZS), ainsi qu'autour des racines des plantes macrophytes (6), est alors aérobie. Ensuite, ces eaux prétraitées transitent vers une zone fonctionnelle saturée (ZI) dans la partie inférieure ou zone de fond (2') du contenant (2). Toutefois, avant de rejoindre cette zone fonctionnelle saturée inférieure (ZI), ces eaux auront séjourné temporairement (le temps de constituer une bâchée par accumulation) dans la zone fonctionnelle médiane (ZM) pour y subir une seconde phase de traitement, essentiellement d'adsorption des polluants sur les matériaux de la seconde couche filtrante (5') et de biodégradation aérobie/anaérobie. Du fait de l'espace libéré suite à l'évacuation d'une bâchée prélevée au fond du contenant (2), les eaux présentes dans la zone fonctionnelle médiane (ZM) vont percoler vers la zone fonctionnelle inférieure (ZI) pour y demeurer pendant une durée prolongée. L'état de saturation permanent de cette dernière, permet non seulement d'augmenter le temps de séjour et donc de traitement final, mais également de favoriser les processus de traitement biologique dans des conditions aérobies/anaérobies, ainsi que les phénomènes d'adsorption des polluants. De plus, la saturation permet d'assurer un stockage de l'eau traitée (ET) qui est ainsi disponible pour une réutilisation en irrigation / arrosage dans le jardin. Le contenant (2) est avantageusement dimensionné pour permettre de disposer d'une réserve d'environ 80 à 100 L par jour et par personne pour l'arrosage (consommation moyenne courante dans les pays européens).

Une description complémentaire plus détaillée est donnée ci-dessous, à titre d'exemple et par référence à la figure annexée.

Le contenant (2) en forme de pot, avec son massif de matériaux filtrants (3) plantée en surface, est alimenté par le dessus par le dispositif de distribution des eaux usées ménagères brutes (EM) d'une habitation. Ce dernier consiste par exemple en un tuyau raccordé au pot à l'aide d'un joint en caoutchouc ou d'un passe paroi, afin d'assurer l'étanchéité de l'ensemble. Les eaux ménagères déversées arrivant sur le filtre se répartissent à la surface du média filtrant, subissent d'abord une filtration mécanique en traversant la couche de paillage superficielle (5‴), puis s'écoulent verticalement au travers d'une première couche de filtrage (5) formée de sable ayant pour rôle de retenir les matières en suspension et de traiter la pollution dissoute contenue dans les eaux. La couche de sable est plantée de macrophytes (6) servant de support à la biomasse épuratrice ainsi que d'agents décolmatants. Cette couche de sable est recouverte d'une couche de matériau organique du type plaquettes de bois et/ou écorces de bois formant un paillage et permettant de conserver une hygrométrie satisfaisante dans le sable, propice au développement des plantes et des micro-organismes épurateurs. Ensuite, les eaux percolent verticalement dans une seconde couche filtrante (5') formée d'un mélange de plusieurs matériaux naturels qui ensemble augmentent la capacité de traitement assurée par le dispositif (1), par exemple un mélange homogène de coquilles d'huitres, de charbon actif ou biochar et de terre cuite ou d'argile expansée. Les eaux sont enfin traitées dans une couche de charbon de bois (5") qui représente la dernière étape de filtration des eaux ménagères et constitue le média de stockage de l'eau traitée (ET) en attente d'extraction pour utilisation.

Comme le montre la figure, l'eau traitée (ET) peut être évacuée à deux endroits du pot : une sortie haute (4) pour un arrosage passif automatique et une sortie basse (4') pour alimenter par exemple un arrosoir (14) ou vidanger le pot (2). La sortie haute (4) est alimentée par un tuyau ou conduit de drainage (7), montée dans le massif filtrant (3), ouvert dans la région de fond (2') du pot et doté de crépines ou de grilles (11) pour éviter son colmatage. Ce tuyau ou conduit de drainage (7) permet également l'aération du massif de matériaux filtrants (3). A cette fin, il s'étend à travers le massif filtrant (3) vers le haut, et est doté d'une cheminée d'aération avec chapeau (12) dépassant la surface de ce massif et connectée à l'atmosphère. Par sa construction et son arrangement, l'ensemble [conduit de drainage (7) + arrangement de conduit (8)] avec son piquage latéral (10) au niveau de la cote inférieure (Cmin) et son siphon (8') définissant la cote supérieure (CMax) forme un moyen d'évacuation ou sortie par le haut (4) qui sert à la fois de trop-plein et de point d'arrosage passif, sans intervention humaine. Un tuyau d'arrosage peut y être raccordé afin de diriger l'eau traitée dans les zones du jardin ou de l'espace vert nécessitant un arrosage. L'alimentation de cette sortie haute est réalisée depuis le fond du pot (2) et du massif filtrant (3) afin d'optimiser le temps de séjour des liquides et de garantir que chaque goutte d'eau évacuée a bien subi toutes les étapes de filtration ci-dessus avant de sortir du dispositif (1). Le moyen d'évacuation ou sortie par le bas (4') consiste sur la figure en un robinet installé par exemple à 2-3 cm du fond du pot. Cette sortie en partie basse permet de prélever les eaux avec un arrosoir lorsque le pot (2) est surélevé, par exemple à une hauteur minimale de 0,33 m environ, grâce à un support (13) adéquat. La sortie basse permet également de réaliser une vidange totale du dispositif (1), qui peut être conseillée environ une fois par an au moins, afin de régénérer les propriétés épuratoires du massif de matériaux filtrants (3) plantée. En tout état de cause, quelle que soit la voie de sortie de l'eau (haute ou basse), le dispositif selon l'invention garantit qu'elle aura traversé toutes les couches du massif filtrant (3) et donc subi un traitement complet.

Comme déjà indiqué, il existe au sein du massif de matériaux filtrants (3) plantée trois zones fonctionnelles distinctes : saturée, semi-saturée (ou zone de battement) et non saturée. La première zone saturée, la zone de stockage permanent (ZI), est située au fond du pot (2) et est conçue pour garder un volume constant et toujours disponible d'eau traitée (ET) afin de pouvoir remplir manuellement un arrosoir via le robinet. Ce volume constant est réglé par le niveau du piquage de la sortie haute (Cmin, I2). En-dessous de cette sortie haute, la seule manière de vider le pot (2) est d'ouvrir ce robinet de sortie basse (4').

La deuxième zone semi-saturée, c'est -à- dire la zone médiane de stockage dynamique (ZM) ou zone de battement, est conçue pour permettre un arrosage passif, c'est-à-dire de manière autonome et avantageusement autoamorcée. Au cours de la journée, cette zone médiane (ZM) se remplit et se vide en alternance, par la sortie haute (4). La quantité d'eau disponible dans cette zone est définie par la hauteur maximale de la portion de tuyau en U inversé sur le crochet de fixation (9) et la hauteur de la sortie latérale du conduit de drainage (Cmin). Le petit diamètre du tuyau formant le U permet un effet de siphon et la vidange de cette zone (ZM) de stockage temporaire. Ainsi, le dispositif (1) permet d'obtenir un arrosage autonome et sans besoin d'électricité par effet bâché.

La zone fonctionnelle non saturée supérieure (ZS) est quant à elle réservée au développement racinaire des macrophytes et à la première étape de traitement biologique aérobie des eaux ménagères brutes (EM).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif domestique (1) pour la collecte, le traitement assainissant, le stockage temporaire et la réutilisation aux fins d'arrosage et d'irrigation des eaux ménagères ou grises (EM), le cas échéant brutes, ce dispositif (1) comprenant un contenant (2) étanche ouvert sur le dessus, un massif de matériaux filtrants (3) planté de macrophytes (6) en surface et au moins un moyen (4, 4') d'extraction et/ou d'évacuation de l'eau traitée (ET) pour son écoulement vers l'extérieur, le massif de matériaux filtrants (3) comportant au moins deux couches de médias filtrants différents (5, 5', 5") qui sont arrangées de manière superposée verticalement dans le contenant (2) et incorporent au moins une couche supérieure (5) plantée, les eaux ménagères (EM) étant déversées sur la surface de la couche supérieure (5) et l'eau traitée (ET) étant extraite, après percolation des liquides à travers le massif de matériaux filtrants (3), depuis une région de fond (2') du contenant (2),
l'un des moyen(s) (4, 4') d'évacuation et/ou d'extraction de l'eau traitée (ET) constitue un dispositif de trop-plein et est configuré pour réaliser automatiquement et passivement, en fonctionnement courant dudit dispositif (1), l'évacuation d'une quantité contrôlée d'eau traitée (ET) lorsque le niveau de liquide présent dans le contenant (2) dépasse une cote maximale (CMax) préréglée,
ce moyen (4) d'évacuation de l'eau traitée (ET) constituant trop-plein comprenant un conduit de drainage (7) qui est raccordé à un arrangement (8) de conduit d'évacuation extérieure, comprenant un siphon (8') fixant la cote maximale (CMax) et configuré pour réaliser avec auto-amorçage une évacuation de l'eau traitée (ET) lorsque le niveau de liquide dans le contenant (2) atteint cette cote maximale (Cmax),
dispositif (1) **caractérisé**
**en ce que** le massif de matériaux filtrants (3) comprend, en fonctionnement courant, trois zones fonctionnelles superposées pour les liquides présents dans le contenant (2), à savoir : i) une zone inférieure (ZI) de stockage permanent, continuellement saturée en eau traitée (ET) et soumise à des extractions par bâchées, ii) une zone médiane (ZM) de stockage dynamique, saturée de manière variable en liquides et soumise à des vidanges séquentielles vers la zone inférieure (ZI), et iii) une zone supérieure (ZS) dédiée au développement racinaire des plantes (6) présentes en surface, non-saturée et autorisant le passage vertical des liquides contenus dans les eaux ménagères (EM) déversées vers la zone médiane (ZM), suite à un premier traitement,
**en ce que** le conduit de drainage (7) est ouvert au niveau de la région de fond (2') du contenant (2) et s'étend dans le massif de matériaux filtrants (3) depuis cette région de fond (2') au moins jusqu'au niveau d'une cote minimale ou inférieure (Cmin),
**en ce que** l'ensemble [conduit de drainage (7) + arrangement de conduit (8)] présente un piquage latéral (10) au niveau de ladite cote inférieure (Cmin), et en ce que la zone de stockage permanent (ZI) située au fond du contenant (2) est conçue pour garder un volume constant et toujours disponible d'eau traitée (ET), ce volume constant étant réglé par le niveau ou la cote (Cmin) dudit piquage (10) de la sortie haute et l'évacuation contrôlée et automatique d'eau traitée (ET) s'effectuant par bâchées dont le volume est réglé par combinaison de la cote minimale (Cmin) et de la cote maximale (Cmax).

2. Dispositif selon la revendication 1, **caractérisé en ce que**, dans le contenant (2), le plan horizontal associé à la cote maximale (CMax) correspond sensiblement à une interface (11) entre la zone médiane (ZM) et la zone supérieure (ZS) et **en ce que** le plan horizontal associé à la cote (Cmin) correspond sensiblement à une interface (I2) entre la zone médiane (ZM) et la zone inférieure (ZI).

3. Dispositif selon l'une des revendications 1 et 2, **caractérisé en ce que** le massif de matériaux filtrants (3) est composé structurellement d'au moins trois couches filtrantes granulaires (5, 5', 5") différentes superposées verticalement, à savoir, du haut vers le bas, d'une première couche filtrante (5) formée de sable et recevant les systèmes racinaires de plantes (6), avantageusement des macrophytes, d'une deuxième couche filtrante (5') formée d'un mélange de matériaux naturels et d'une troisième couche filtrante (5") formée de charbon de bois, la première couche filtrante (5) étant, préférentiellement, recouverte d'une couche superficielle de paillage (5‴) apte à réaliser une filtration mécanique des eaux ménagères ou grises (EM) directement déversées sur elle.

4. Dispositif selon les revendications 1 et 3, **caractérisé en ce que** la zone inférieure (ZI) de stockage permanent correspond à la majeure partie de la troisième couche filtrante (5"), **en ce que** la zone médiane (ZM) de stockage dynamique comprend la deuxième couche filtrante (5') et une tranche supérieure d'épaisseur limitée (el) de la troisième couche filtrante (5"), attenante à la deuxième couche filtrante (5'), et **en ce que** la zone supérieure (ZS) non-saturée correspond à la première couche filtrante (5) additionnée de la couche de paillage (5‴).

5. Dispositif selon l'une quelconque des revendications 1 à 4, **caractérisé en ce que** le siphon (8') est constitué par une portion de tuyau flexible formant un U inversé, ce siphon (8') étant attaché au contenant (2), par exemple par l'intermédiaire d'un site de fixation (9) du type crochet, éventuellement réglable en hauteur.

6. Dispositif selon l'une quelconque des revendications 1 à 5, **caractérisé en ce que** le conduit de drainage (7) se prolonge vers le haut au-delà du niveau de la cote minimale (Cmin), jusqu'au-dessus de la surface de la couche supérieure (5), et le cas échéant au-dessus d'une éventuelle couche de paillage (5‴), pour former une cheminée d'aération (7'), le raccordement entre le conduit de drainage (7) et l'arrangement (8) de conduit d'évacuation extérieure se présentant sous la forme d'un piquage (10) latéral dans ledit conduit de drainage (7) à hauteur de la cote minimale (Cmin).

7. Dispositif selon l'une quelconque des revendications 1 à 6, **caractérisé en ce qu'**il comprend un second moyen (4') d'évacuation de l'eau traitée (ET) depuis la région de fond (2') du contenant (2) et permettant un soutirage contrôlé de l'eau traitée (ET), jusqu'à une possible vidange complète des liquides du contenant (2), par exemple sous la forme d'un embout de soutirage à robinet.

8. Dispositif selon l'une quelconque des revendications 1 à 7, **caractérisé en ce que** le contenant (2) est installé à une certaine hauteur du sol ou posé au sol et se présente sous la forme d'un pot, cylindrique ou tronconique en direction du fond.

9. Dispositif selon l'une quelconque des revendications 1 à 8, **caractérisé en ce que**, pour le traitement des eaux ménagères (EM) d'une maison individuelle, le massif de matériaux filtrants (3) à structure stratifiée est constitué d'un volume sensiblement cylindrique, éventuellement légèrement effilé tronconiquement vers le bas, d'un diamètre d'environ 1 m et d'une hauteur comprise entre environ 70 cm et 120 cm, préférentiellement de l'ordre d'environ 80 cm, et comprenant les couches filtrantes suivantes, superposées du haut vers le bas : i) une couche superficielle de paillage (5‴) d'épaisseur comprise entre environ 5 cm et 15 cm, par exemple formée de plaquettes, de sciure et/ou d'écorces de bois, ii) une première couche filtrante granulaire (5) formée de sable et d'épaisseur comprise entre environ 10 cm et 40 cm, iii) une deuxième couche filtrante granulaire (5') formée d'un mélange de coquilles d'huitres, de charbon et de terre cuite ou d'argile expansée, et d'épaisseur comprise entre environ 5 cm et 15 cm, et iiii) une troisième couche (5") formée de charbon de bois, de type charbon actif ou biochar, et d'épaisseur comprise entre environ 30 cm et 60 cm. 1
